# DEMANDE DE BREVET EUROPEEN

(11) **EP 4 079 616 A1**
(43) Date de publication de la demande: **26.10.2022**
(21) Numéro de dépôt: 22168823.7
(22) Date de dépôt: 19.04.2022
(51) Int. Cl.: B62K 3/00, B62K 5/05, B62K 5/08, B62J 1/08

(54) **VÉHICULE COMPORTANT UN DISPOSITIF D ASSISE MOBILE**

(30) Priorité: 20.04.2021 FR 2104082
(71) Demandeur: VEMOO, 67230 Sermersheim (FR)
(72) Inventeur: AUDREZET, Arnaud, 44260 SAVENAY (FR); HURSTEL, Sébastien, 67150 LIMERSHEIM (FR)
(74) Mandataire: Hege, Frédéric

(57) **Abrégé**

La présente invention concerne un véhicule comportant un châssis (1), au moins deux sustentateurs (2a, 2b) fixés audit châssis (1), un dispositif de guidage, et un dispositif d'assise (3) mobile par rapport audit châssis (1) entre une position haute et une position basse, ledit véhicule comportant un moyen de positionnement du dispositif d'assise configuré pour qu'un utilisateur puisse modifier la position du dispositif d'assise (3), caractérisé en ce qu'entre la position basse et la position haute, chaque point du dispositif d'assise (3) est élevé d'au moins 20 cm par rapport au châssis, et en ce que la forme et les dimensions de la surface d'appui au sol dudit véhicule sont identiques lorsque le dispositif d'assise (3) est en position haute et lorsque le dispositif d'assise (3) est en position basse.

La présente invention concerne également un procédé d'utilisation d'un véhicule selon l'invention.

## Description

La présente invention se situe dans le domaine du transport. Elle concerne plus particulièrement un véhicule comportant un dispositif d'assise mobile entre une position haute et une position basse.

Dans la plupart des véhicules, le siège du conducteur est fixe par rapport au châssis lors du déplacement du véhicule. Or dans certains cas, il y a des avantages à pouvoir régler la hauteur de ce siège sans arrêter le véhicule. Ainsi pour une conduite en milieu urbain, un siège haut peut être pertinent pour avoir une bonne vue de l'environnement immédiat. De plus un siège haut peut rendre le véhicule plus visible, ce qui augmente la sécurité dans un milieu dense. Alors que sur route, un siège bas peut être plus pertinent pour améliorer l'aérodynamique et donc la vitesse du véhicule.

Le document WO2014145878 propose un véhicule permettant une modification de la hauteur de siège pendant le roulage. Le mouvement du siège est réalisé en modifiant la forme du châssis et la position des roues. Lorsque le siège est en position haute, le centre de gravité du véhicule est relevé et les roues sont plus rapprochées. La stabilité du véhicule est alors moins bonne.

Un objet de la présente invention est de proposer un véhicule comportant un siège mobile en hauteur, qui offre une stabilité satisfaisante quelle que soit la position du siège.

Un autre objet de la présente invention est de proposer un véhicule comportant un siège mobile en hauteur, qui offre un bon confort de conduite quelle que soit la position du siège.

La présente invention a pour objet de répondre au moins en partie aux objets précités en proposant un véhicule dont le siège est réglable en hauteur pendant la conduite, sans nécessiter de modifier l'empattement ou la position latérale des roues. A cet effet, elle propose un véhicule comportant un châssis, au moins deux roues fixées audit châssis, un dispositif de guidage, et un dispositif d'assise mobile par rapport audit châssis entre une position haute et une position basse, ledit véhicule comportant un moyen de positionnement du dispositif d'assise configuré pour qu'un utilisateur puisse modifier la position du dispositif d'assise de la position basse vers la position haute, caractérisé en ce qu'entre la position basse et la position haute, chaque point du dispositif d'assise est élevé d'au moins 20 cm par rapport au châssis, et en ce que la forme et les dimensions de la surface d'appui au sol dudit véhicule sont identiques lorsque le dispositif d'assise est en position haute et lorsque le dispositif d'assise est en position basse.

Grâce à ces dispositions, le véhicule selon l'invention peut être utilisé avec différentes hauteurs de siège, une hauteur basse permettant une meilleure aérodynamique, une hauteur haute permettant une meilleure visibilité, le passage d'une position à l'autre ne nécessitant pas d'arrêter la conduite. Le châssis reste fixe afin de conserver à tout moment une bonne stabilité du véhicule et des caractéristiques de direction identiques.

Selon d'autres caractéristiques :
- ledit moyen de positionnement du dispositif d'assise peut être configuré pour qu'un utilisateur puisse modifier la position du dispositif d'assise de ladite position basse vers ladite position haute pendant le pilotage dudit véhicule, la commande de ladite position du dispositif d'assise étant indépendante de la vitesse du véhicule, ce qui permet de régler la position du dispositif d'assise sans arrêter la conduite, ce qui est plus pratique,
- ledit véhicule peut comporter un dispositif de guidage, ledit dispositif de guidage comprenant un moyen de commande de guidage mobile par rapport au châssis, et un dispositif de positionnement du moyen de commande de guidage configuré pour être actionné par l'utilisateur pendant le pilotage dudit véhicule, ce qui permet un meilleur confort de guidage quelle que soit la position du dispositif d'assise,
- ledit moyen de commande de guidage peut être fixé audit dispositif d'assise, de façon à ce que le moyen de commande de guidage suive les mouvements du dispositif d'assise par rapport au châssis, ce qui permet un meilleur confort de guidage quelle que soit la position du dispositif d'assise.
- ledit dispositif de guidage peut comprendre encore un arbre tournant central situé entre le dispositif d'assise et le châssis, ledit arbre tournant central étant de longueur et/ou d'inclinaison variable et configuré pour adapter sa longueur et/ou son inclinaison lors des mouvements du dispositif d'assise par rapport au châssis, ce qui est un moyen de réalisation simple et robuste de l'invention,
- ledit dispositif de guidage peut comporter un arbre tournant aval, une première extrémité dudit arbre tournant central étant articulée avec ledit arbre tournant aval par un premier joint rotule, l'axe de rotation de l'arbre tournant aval étant solidaire du châssis, ce qui permet de facilement transmettre les commandes de guidage par exemple à un essieu,
- le dispositif de guidage peut comporter un arbre tournant amont relié audit moyen de commande de guidage, de façon à ce qu'une commande de guidage d'un utilisateur génère une rotation dudit arbre tournant amont, ledit arbre tournant amont étant articulé avec une deuxième extrémité de l'arbre tournant central par un deuxième joint rotule, l'axe de rotation de l'arbre tournant amont étant solidaire du dispositif d'assise, ce qui permet que les mouvements de l'utilisateur de commande de guidage soient identiques quel que soit la position du dispositif d'assise,
- ledit véhicule peut être tel que :
   - ledit moyen de commande de guidage comporte au moins un élément de commande, lesdits éléments de commande étant fixés mobiles en rotation autour d'un axe de commande solidaire du dispositif d'assise,
   - ledit arbre tournant amont comporte, à son extrémité éloignée dudit deuxième joint rotule, une barre de manœuvre perpendiculaire à son axe de rotation,
   - et chaque élément de commande est relié à une des extrémités de la barre de manœuvrede manière à ce que la rotation d'au moins un élément de commande produise la rotation de la barre de manœuvre,
      ce qui est un moyen de réalisation simple et robuste de l'invention,
- ledit véhicule peut comporter un pédalier, ledit véhicule pouvant être configuré pour qu'au moins un point du pédalier reste à distance constante d'au moins un point du dispositif d'assise lors des mouvements dudit dispositif d'assise, ce qui permet que la distance entre les hanches de l'utilisateur et le pédalier soit pratiquement constante, et assure un bon confort de pédalage quelle que soit la position du dispositif d'assise,
- ledit pédalier peut être mobile par rapport au châssis, ledit véhicule pouvant comporter un dispositif de positionnement du pédalier, de préférence configuré afin que ledit pédalier soit mobile entre une position avancée et une position reculée, de sorte que lorsque le dispositif d'assise est en position haute, le pédalier est en position reculée, et lorsque le dispositif d'assise est en position basse, le pédalier est dans une position plus avancée ; ce qui permet que la distance entre les hanches de l'utilisateur et le pédalier soit pratiquement constante, et assure un bon confort de pédalage quelle que soit la position du dispositif d'assise,
- ledit dispositif de positionnement du pédalier peut comporter une bielle de pédalier, une première extrémité de ladite bielle de pédalier étant solidaire de l'axe du pédalier, et une deuxième extrémité de ladite bielle de pédalier étant solidaire du dispositif d'assise, ce qui est un mode de réalisation simple et robuste de l'invention.
- le pédalier peut comporter une pièce de coulissement apte à coulisser le long d'un support de pédalier solidaire du châssis, ce qui est un mode de réalisation simple et robuste de l'invention,
- ledit dispositif d'assise peut être relié au châssis par deux bielles inférieures parallèles entre elles et deux bielles supérieures parallèles entre elles, ce qui permet un mouvement proche d'une translation, lors duquel l'inclinaison du dispositif d'assise évolue lentement,
- ledit véhicule peut comporter un dispositif d'assistance et un moyen de verrouillage de la position du dispositif d'assise par rapport au châssis, ledit dispositif d'assistance comportant au moins un moyen de rappel, une première extrémité dudit moyen de rappel étant solidaire du châssis et une deuxième extrémité dudit moyen de rappel étant solidaire du dispositif d'assise, ce qui permet de facilement mettre en mouvement le dispositif d'assise en faisant varier la force que l'utilisateur exerce sur le dispositif d'assise avec son poids.
- ledit véhicule peut comporter un élément de carrosserie solidaire dudit dispositif d'assise, ce qui permet d'améliorer l'aérodynamique du véhicule, et de protéger l'utilisateur des intempéries et/ou d'améliorer sa sécurité.

La présente invention concerne également un procédé d'utilisation d'un véhicule selon l'invention, comportant les étapes suivantes :
- pilotage dudit véhicule avec le dispositif d'assise en position basse, et le cas échéant le pédalier en position avancée,
- sans arrêter le véhicule, changement de position du dispositif d'assise jusqu'à une position haute, et le cas échéant du pédalier jusqu'à une position reculée.

Grâce à ces dispositions, le véhicule selon l'invention peut être utilisé avec différentes hauteurs de siège, une hauteur basse permettant une meilleure aérodynamique, une hauteur haute permettant une meilleure visibilité, le passage d'une position à l'autre ne nécessitant pas d'arrêter la conduite. Le châssis reste fixe afin de conserver à tout moment une bonne stabilité du véhicule et des caractéristiques de direction identiques.

La présente invention sera mieux comprise à la lecture de la description détaillée qui fait suite, en référence aux figures annexées dans lesquelles :
[Fig. 1] La fig. 1 est une vue de côté d'un véhicule selon un mode de réalisation préféré de l'invention, avec le dispositif d'assise en position haute.
[Fig. 2] La fig. 2 est une vue de côté du véhicule de la fig. 1, avec le dispositif d'assise en position basse.
[Fig. 3] La fig. 3 est une vue en perspective avant droite du véhicule de la fig. 1, avec le dispositif d'assise en position haute.
[Fig. 4] La fig. 4 est une vue en perspective avant droite du véhicule de la fig. 1, avec le dispositif d'assise en position basse.
[Fig. 5] La fig. 5 est une vue en perspective arrière droite du véhicule de la fig. 1, avec le dispositif d'assise en position haute.
[Fig. 6] La fig. 6 est une vue en perspective arrière droite du véhicule de la fig. 1, avec le dispositif d'assise en position basse.
[Fig. 7] La fig. 7 est une vue en perspective arrière gauche du véhicule de la fig. 1, avec le dispositif d'assise en position haute.

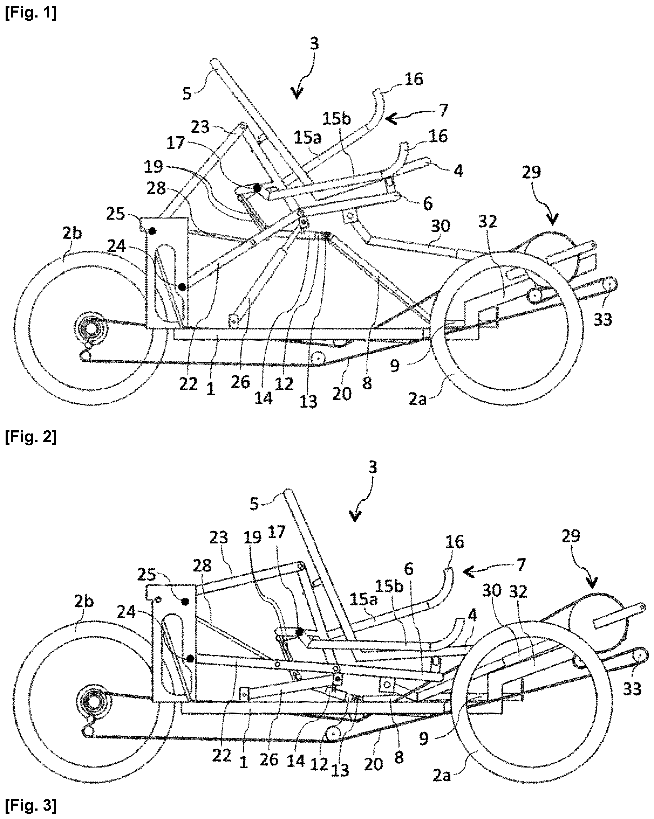

Le véhicule selon l'invention, dont un mode de réalisation préféré est illustré aux fig. 1 à 7, comporte un châssis 1, et au moins deux sustentateurs 2 fixés au châssis 1. Les sustentateurs 2 sont de préférence des roues. Il peut également s'agir de chenilles, de skis, ou encore de flotteurs. Le véhicule peut comporter par exemple deux roues, comme une bicyclette, trois roues 2, comme un tricycle, avec deux roues avant 2a et une roue arrière 2b ou une roue avant 2a et deux roues arrière 2b, ou encore quatre roues 2, avec deux roues avant 2a et deux roues arrière 2b. Le véhicule comporte de préférence deux roues avant 2a et une roue arrière 2b, comme illustré aux fig. 3 à 7.

Le châssis 1 est de préférence rigide, c'est-à-dire qu'il est composé d'une ou plusieurs pièces solidaires les unes des autres. On peut toutefois prévoir un châssis non rigide, avec des parties articulées, sans sortir du cadre de la présente invention.

Dans le cadre de la présente invention, la direction avant est la direction d'avancée du véhicule en marche avant. La direction arrière est la direction opposée à la direction avant.

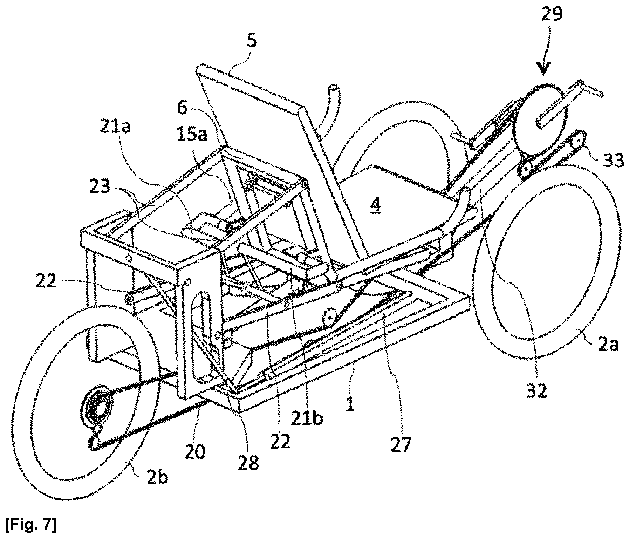

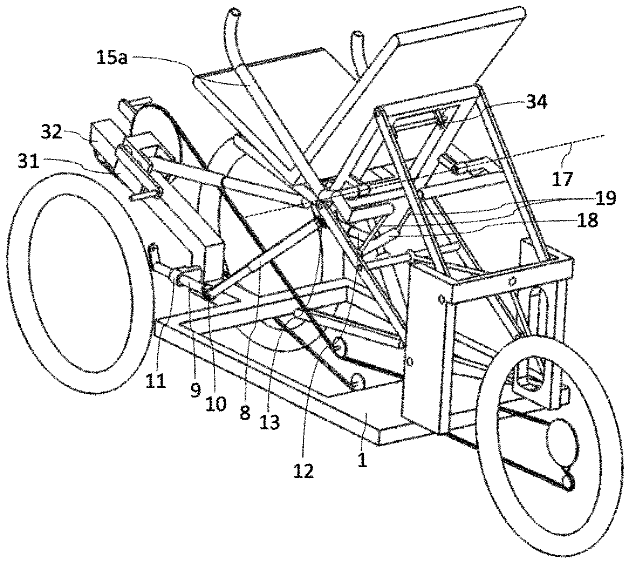

Le véhicule comporte également un dispositif d'assise 3, sur lequel peut s'asseoir un utilisateur lorsqu'il conduit le véhicule. Le véhicule peut comporter d'autres dispositifs d'assise afin de transporter des passagers, en particulier un ou deux enfants. Toutefois dans la suite de la description, le terme de dispositif d'assise désignera le dispositif d'assise de l'utilisateur qui conduit le véhicule. Le dispositif d'assise 3 comporte un siège comprenant au moins une assise 4, et de préférence un dossier 5. Le dispositif d'assise 3 comporte de préférence également un support de siège 6. L'assise 4 et le dossier 5 peuvent avoir des positions réglables par rapport au support de siège 6, pour s'adapter à la morphologie de l'utilisateur ou à ses préférences de confort. On peut prévoir un réglage de l'inclinaison du dossier 5 par rapport à un support de siège 6, par exemple par un système d'encoches 34 tel que représenté en fig 7. Toutefois dans une utilisation normale de conduite du véhicule, ces réglages ne sont pas modifiés. On considère donc dans la suite de la description que le dispositif d'assise 3, qu'il comporte simplement un siège, ou plusieurs éléments tels qu'un siège et un support de siège 6, constitue un bloc dont tous les éléments sont solidaires entre eux.

Le dispositif d'assise 3 est mobile par rapport au châssis 1, entre une position haute et une position basse. En particulier le véhicule peut être utilisé avec un dispositif d'assise 3 en position haute, en position basse, ou dans une position intermédiaire. Lorsque le dispositif d'assise 3 est en position haute, n'importe quel point faisant partie du dispositif d'assise est situé plus haut qu'il ne l'est lorsque le dispositif d'assise est en position basse. Lorsqu'il passe de la position haute à la position basse, ou de la position basse à la position haute, le mouvement du dispositif d'assise 3 peut être de type translation, rotation, ou tout autre mouvement composé par exemple d'une translation et d'une rotation.

La différence de hauteur entre la position haute et la position basse, prise en n'importe quel point du dispositif d'assise, est par exemple supérieure à 10 cm, de préférence supérieure à 35 cm. Ceci permet d'avoir une position basse favorisant une meilleure aérodynamique, pour un roulage rapide du véhicule. La position basse peut également être utilisée pour réduire l'encombrement du véhicule, pour le ranger. La position haute une meilleure visibilité de l'utilisateur sur son environnement et des personnes environnantes sur le véhicule. La position haute peut aussi être utilisée pour un accès plus facile au véhicule, l'utilisateur n'ayant pas besoin de se baisser pour accéder au dispositif d'assise 3. Il peut être prévu d'utiliser le véhicule dans une ou plusieurs positions intermédiaires entre la position haute et la position basse. Dans un mode de réalisation préféré de l'invention, le véhicule peut être utilisé dans n'importe quelle position intermédiaire entre la position haute et la position basse.

On appelle surface d'appui au sol du véhicule la surface définie par l'ensemble des roues 2. La surface d'appui au sol est indépendante d'éventuelles roues qui ne supporteraient pas le poids du véhicule, telles que des roulettes accessoires, par exemple des roulettes pour assurer un équilibre comme sur un vélo enfant, ou encore une roulette pour une prise de mesure. Dans un mode de réalisation préféré, la forme et les dimensions de la surface d'appui au sol sont constantes au cours du temps, abstraction faite de l'éventuel mouvement d'une roue 2 par rapport au châssis permis par une suspension. Elles sont notamment identiques, que le dispositif d'assise soit en position haute ou en position basse. En particulier les roues sont fixées à des éléments du châssis solidaires les uns des autres, ou l'ensemble du châssis est rigide.

Le véhicule comporte un moyen de positionnement du dispositif d'assise configuré pour qu'un utilisateur puisse modifier la position du dispositif d'assise. Dans un mode de réalisation préféré, cette modification est possible pendant le pilotage dudit véhicule, c'est-à-dire pendant que l'utilisateur est sur le véhicule et que celui-ci est en mouvement. La commande des mouvements du dispositif d'assise 3 est de préférence indépendante de tout autre paramètre du véhicule tel que sa vitesse, ou le poids qu'il supporte. L'utilisateur est capable de choisir n'importe quelle position du dispositif d'assise 3, quelle que soit la vitesse du véhicule.

Le véhicule comporte encore un dispositif de guidage. Le dispositif de guidage comporte un moyen de commande de guidage 7. Le dispositif de guidage permet de transmettre une commande de guidage de l'utilisateur, qui actionne le moyen de commande de guidage 7, vers une ou plusieurs roues 2, afin de diriger le véhicule dans une direction souhaitée.

Le moyen de commande de guidage 7 est mobile par rapport au châssis 1, et le véhicule comporte un dispositif de positionnement du moyen de commande de guidage configuré pour être actionné par l'utilisateur pendant le pilotage dudit véhicule.

Dans un mode de réalisation préféré de l'invention, illustré aux fig. 1 à 7, la position du moyen de commande de guidage 7 est directement liée à la position du dispositif d'assise 3, et le dispositif de positionnement du moyen de commande de guidage est automatiquement actionné en mettant le dispositif d'assise 3 en mouvement. Le moyen de commande de guidage 7 est alors fixé au dispositif d'assise 3, le cas échéant au support de siège 6, afin de suivre les mouvements du dispositif d'assise 3 par rapport au châssis 1. Ainsi le moyen de commande de guidage 7 est toujours disposé proche de l'utilisateur assis sur le dispositif d'assise 3, que le dispositif d'assise 3 soit en position haute ou en position basse. Afin de réaliser cette mobilité du moyen de commande de guidage 7, le dispositif de guidage peut comporter un arbre tournant central 8 reliant le dispositif d'assise 3, le cas échéant le support de siège 6, au châssis 1. Dans la présente invention, un arbre tournant s'entend comme un élément allongé tournant autour de son axe longitudinal. L'arbre tournant central 8 relie le dispositif d'assise 3 au châssis 1 soit directement, soit par l'intermédiaire d'autres pièces situées entre l'arbre tournant central 8 et le siège 3 et/ou entre l'arbre tournant central 8 et le châssis 1. La longueur et/ou l'inclinaison de l'arbre tournant central 8 varie lors des mouvements du dispositif d'assise 3, et donc du moyen de commande de guidage 7, par rapport au châssis 1. La variation de longueur et/ou d'inclinaison de l'arbre tournant central 8 permet lors de ces mouvements de reprendre la variation de distance entre le moyen de commande de guidage 7 et la pièce du véhicule sur laquelle agit le dispositif de guidage pour contrôler la direction du véhicule, par exemple un essieu (non représenté). Afin de pouvoir faire varier sa longueur, l'arbre tournant central 8 peut par exemple être télescopique, et comporter une première section coulissant dans une deuxième section, comme illustré aux fig. 1 à 7. La rotation de l'arbre tournant central 8 permet de transmettre la commande de guidage en provenance du moyen de commande de guidage 7.

Le dispositif de guidage peut comporter un arbre tournant aval 9, articulé avec l'arbre tournant central 8 par un premier joint rotule 10. Dans la présente invention, un joint rotule est un joint entre deux arbres tournants permettant de les rendre solidaires en rotation autour de leur propre axe, qu'ils soient alignés ou non. L'axe de rotation de l'arbre tournant aval 9 est solidaire du châssis 1, par exemple en tournant à l'intérieur d'une bague aval 11 fixée sur le châssis 1. Ainsi le mouvement de rotation de l'arbre tournant central 8 est converti en un mouvement de rotation selon un axe fixe par rapport au châssis 1, et peut être transmis par exemple à un essieu. Alternativement, l'arbre tournant central 8 peut être directement relié à un élément agissant sur l'orientation d'une ou plusieurs roues 2 sans que le véhicule ne comporte un arbre tournant aval 9.

Le dispositif de guidage peut encore comporter un arbre tournant amont 12, articulé avec l'arbre tournant central 8 par un deuxième joint rotule 13. L'arbre tournant amont 12 est relié au moyen de commande de guidage 7, de sorte à ce qu'une commande de guidage de l'utilisateur génère une rotation de l'arbre tournant amont 12. L'axe de rotation de l'arbre tournant amont 12 est solidaire du dispositif d'assise 3, par exemple en tournant à l'intérieur d'une bague amont 14 fixée sur le dispositif d'assise 3. Ainsi les mouvements de l'utilisateur nécessaires au guidage du véhicule ne dépendent que très peu de la position du dispositif d'assise 3, ils sont à peu près identiques que le dispositif d'assise 3 soit en position haute ou en position basse.

Dans le mode de réalisation préféré de l'invention, le moyen de commande de guidage 7 comporte au moins un, de préférence deux éléments de commande 15. Chaque élément de commande 15 est actionnable par exemple par une des mains de l'utilisateur du véhicule, de préférence par l'intermédiaire de poignées 16 situées aux extrémités des éléments de commande 15. Les éléments de commande 15 sont de préférence mobiles en rotation autour d'un même axe de commande 17 solidaire du dispositif d'assise 3. Les éléments de commande 15 sont par exemple fixés libres en rotation au support de siège 6. Dans ce mode de réalisation, l'arbre tournant amont 12 peut avoir une forme en T, et comporter à son extrémité éloignée du deuxième joint rotule 13 une barre de manœuvre18 perpendiculaire à son axe de rotation. Chaque élément de commande 15 est alors reliée à une des extrémités de la barre de manœuvre18 par exemple par l'intermédiaire de deux biellettes 19. Lorsque l'utilisateur actionne un des éléments de commande 15, il pousse ou tire par exemple un premier élément de commande 15. Ceci génère une rotation du premier élément de commande 15 autour de l'axe de commande 17. Cette rotation provoque la rotation du deuxième élément de commande 15 dans le sens inverse, et la rotation de l'arbre tournant amont 12. La rotation de l'arbre tournant amont 12 fait tourner l'arbre tournant central 8, puis l'arbre tournant aval 9, puis finalement une ou plusieurs roues 2 par l'intermédiaire d'un mécanisme utilisant par exemple une crémaillère ou un embiellage.

Le moyen de commande de guidage 7 peut être fonctionnel avec un seul élément de commande 15. Il est préférable de disposer deux éléments de commande 15 afin de pouvoir diriger le véhicule à deux mains, ou de pouvoir choisir quelle main le dirige.

Par exemple sur les fig. 1 à 7, l'élément de commande gauche 15a est relevé et l'élément de commande droite 15b est abaissé, ce qui a pour conséquence une inclinaison de la barre de manœuvre 18 vers la gauche de la direction d'avancée du véhicule.

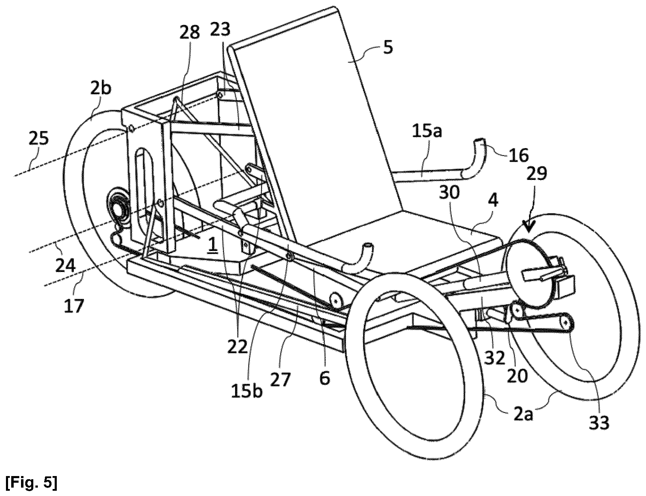

Comme illustré en fig. 5, l'arbre tournant amont 12, l'arbre tournant central 8 et l'arbre tournant aval 9 peuvent être décalés sur un côté du véhicule, par exemple pour ne pas interférer avec une chaîne de transmission 20. Dans ce cas on peut par exemple prévoir que chaque élément de commande 15 comporte une partie arrière 21 s'étendant vers le centre du véhicule, et que la partie arrière gauche 21a soit plus longue ou plus courte que la partie arrière droite 21b, les biellettes 19 étant fixées aux extrémités de ces parties arrières 21.

Dans le mode de réalisation illustré aux fig. 1 à 7, la longueur de l'arbre tournant central 8 varie pour accompagner le mouvement du dispositif d'assise 3 et il est articulé avec des arbres tournants aval 12 et amont 9. Toutefois on peut utiliser dans le cadre de la présente invention différents systèmes dans lesquels la longueur de l'arbre tournant central 8 peut ne pas varier, mais alors son inclinaison varie, toujours pour accompagner le mouvement du dispositif d'assise 3.

L'arbre tournant central 8 peut être inclinable de longueur fixe, et tourner autour d'un axe horizontal situé à son extrémité avant. Le moyen de commande de guidage 7 peut alors être fixé à l'extrémité arrière de l'arbre tournant central 8 et suivre un mouvement de rotation.

Si le véhicule comporte une ou plusieurs bielles reliant le dispositif d'assise 3 au châssis 1, l'arbre tournant central 8 peut être disposé dans le plan formé par une des bielles et son axe de rotation. L'arbre tournant central 8 peut alors être de longueur fixe et être relié à un arbre tournant aval 12 par un joint rotule. Dans cette solution, le plus simple est alors de relier directement le moyen de commande de guidage 7 à l'arbre tournant central 8. On peut toutefois préférer disposer un arbre tournant amont 9 articulé à l'arbre central tournant par un joint rotule, l'arbre tournant amont 9 étant solidaire du dispositif d'assise 3. Ainsi les mouvements de guidage effectués par l'utilisateur sont constants, étant effectués autour d'un axe fixe par rapport au dispositif d'assise 3.

L'arbre tournant central 8 peut être articulé avec un arbre intermédiaire. Ainsi, dans une solution similaire à celle illustrée aux fig. 1 à 7, l'arbre central tournant 8 peut être de longueur fixe et l'arbre intermédiaire disposé entre l'arbre tournant central et l'arbre tournant amont 9 ou aval 12, les arbres tournants étant reliés entre eux par des joints rotules. Ceci permet d'éviter l'utilisation d'un arbre tournant central 8 de longueur variable.

Enfin si le mouvement du dispositif d'assise 3 est un mouvement de translation, l'arbre tournant central 8 peut être d'inclinaison fixe, par exemple parallèle au mouvement de translation, proche de la verticale, et coopérer avec un arbre tournant amont 12 par exemple par embiellage, ou par un système d'engrenages ou de crémaillères. L'arbre tournant central 8 peut alors être réalisé par une pièce de longueur fixe, et on considère que l'arbre tournant central 8 est constitué de la section de cette pièce située entre sa liaison avec le moyen de commande de guidage 7 et sa liaison avec l'arbre tournant aval 12. La longueur de l'arbre tournant central 8 est donc variable en ce que la distance entre la liaison de l'arbre tournant central 8 avec le moyen de commande de guidage 7 et la liaison de l'arbre tournant central 8 avec l'arbre tournant aval 12 est variable.

Enfin, la position du moyen de commande de guidage 7 peut ne pas être directement liée à la position du dispositif d'assise 3. Le véhicule peut comporter un système permettant à l'utilisateur de modifier la position du moyen de commande de guidage 7 manuellement, et de préférence de le bloquer dans la position désirée. Un tel changement de position peut par exemple être réalisé avant, après ou pendant le changement de position du dispositif d'assise 3. Il peut par exemple s'agir d'un moyen de commande de guidage 7 monté sur un arbre, télescopique ou non, pivotant ou non autour d'un axe solidaire du châssis 1.

Le dispositif d'assise 3 peut être relié au châssis 1 par une bielle inférieure 22 et une bielle supérieure 23. Comme illustré aux fig. 1 à 7, le dispositif d'assise 3 est de préférence relié au châssis 1 par deux bielles inférieures 22 parallèles entre elles et deux bielles supérieures 23 parallèles entre elles. Les bielles inférieures 22 sont mobiles en rotation autour d'un axe inférieur 24 solidaire du châssis, l'axe inférieur 24 étant de préférence horizontal. Les bielles supérieures 23 sont mobiles en rotation autour d'un axe supérieur 25 solidaire du châssis, l'axe supérieur 25 étant de préférence horizontal. Les axes inférieur 24 et supérieur 25 sont de préférence parallèles entre eux. L'écartement entre les bielles inférieures 22 et supérieures 23 peut être identique, ou non. Le cas échéant, les bielles 22, 23 peuvent être fixées sur le support de siège 6, par exemple sur l'arrière du support de siège 6.

Selon la position et la longueur des bielles 22, 23, l'inclinaison du dispositif d'assise 3 varie plus ou moins selon la hauteur du dispositif d'assise 3.

Chaque bielle 22, 23 peut être composée de deux bielles en série, formant un compas.

Une autre solution est de n'utiliser qu'une paire de bielles, combinées avec un jeu de glissières comprenant un pivot. Il est aussi possible d'utiliser un ou plusieurs jeux de glissières sans bielle, par exemple deux jeux de glissières non parallèles avec un ou plusieurs pivots. On peut enfin faire tourner le dispositif d'assise 3 autour d'un point situé proche de l'avant ou proche de l'arrière du châssis 1, par exemple avec une bielle fixe du côté du dispositif d'assise 3.

Le moyen de positionnement du dispositif d'assise permet à l'utilisateur de choisir la hauteur du dispositif d'assise 3 pendant la conduite.

Le moyen de positionnement du dispositif d'assise peut comporter un dispositif d'assistance comprenant un ou plusieurs moyen de rappel, exerçant de préférence une poussée vers le haut sur le dispositif d'assise 3. Le moyen de rappel est relié d'un côté au dispositif d'assise 3, et de l'autre côté au châssis 1. Le dispositif d'assistance est utilisé pour mettre en mouvement le dispositif d'assise 3, notamment vers la position haute, lorsque l'utilisateur est assis sur le dispositif d'assise 3. Le dispositif d'assistance permet de compenser en partie le poids de l'utilisateur. La force exercée par le dispositif d'assistance peut être réglable afin d'être adaptée, de préférence lorsque le véhicule est à l'arrêt, au poids de l'utilisateur.

Le véhicule comporte également de préférence un moyen de réglage de la position du dispositif d'assise 3 par rapport au châssis 1. Le moyen de verrouillage permet de bloquer le dispositif d'assise 3 en position haute ou en position basse. De préférence le moyen de verrouillage permet également de bloquer le dispositif d'assise 3 dans n'importe quelle position intermédiaire entre la position haute et la position basse.

Lorsque l'utilisateur utilise le véhicule, le moyen de verrouillage est actif afin que le dispositif d'assise 3 ne descende pas ou ne monte pas involontairement. Lorsque l'utilisateur souhaite modifier la hauteur du dispositif d'assise 3, il met en oeuvre le procédé suivant :
- déverrouillage du moyen de verrouillage. On peut alors prévoir que le dispositif d'assistance exerce une force suffisante pour compenser presque totalement le poids de l'utilisateur, ce qui évite que le dispositif d'assise 3 ne descende immédiatement. On peut également prévoir que la force exercée par le dispositif d'assistance est suffisamment faible pour que le dispositif d'assise 3 ne remonte pas trop brutalement. Dans tous les cas, on préférera régler la force du dispositif d'assistance proche du poids de l'utilisateur, afin d'éviter un mouvement brusque du dispositif d'assise 3 après le déverrouillage.
   - si l'utilisateur souhaite baisser la position du dispositif d'assise 3 : poussée du dispositif d'assise 3 vers le bas par un appui de l'utilisateur sur le dispositif d'assise 3. On peut alors prévoir que la différence entre le poids de l'utilisateur et la force du dispositif d'assistance soit suffisamment élevée pour que le poids de l'utilisateur soit suffisant pour faire baisser le dispositif d'assise 3. En particulier cette différence peut être suffisamment faible pour que l'utilisateur puisse positionner précisément le dispositif d'assise 3 dans n'importe quelle position entre la position haute et la position basse.
   - si l'utilisateur souhaite relever la position du dispositif d'assise 3 : poussée du dispositif d'assise 3 vers le haut par un transfert d'une partie du poids de utilisateur hors du dispositif d'assise 3. Pour réaliser ce transfert, l'utilisateur peut appuyer par exemple ses mains ou ses pieds sur une partie du véhicule solidaire du châssis 1, par exemple il peut appuyer ses pieds sur un point faisant partie ou solidaire du châssis. On peut alors prévoir que la différence entre le poids de l'utilisateur et la force du dispositif d'assistance soit suffisamment faible pour que le transfert à réaliser soit faible. En particulier cette différence peut être suffisamment faible pour que l'utilisateur puisse positionner précisément le dispositif d'assise 3 dans n'importe quelle position située entre la position haute et la position basse.
- verrouillage du moyen de verrouillage dans la position souhaitée par l'utilisateur.

On peut prévoir que la force exercée par le moyen d'assistance soit variable avec la hauteur du dispositif d'assise 3. Cette force peut par exemple être plus importante lorsque le dispositif d'assise 3 est en position basse afin de favoriser un mouvement vers le haut, et plus faible lorsque le dispositif d'assise 3 est en position haute afin de favoriser un mouvement vers le bas.

Le moyen de rappel du dispositif d'assistance peut être un vérin 26, par exemple un vérin à ressort pneumatique. Un tel vérin a l'avantage d'agir comme un amortisseur en empêchant des mouvements brusques du dispositif d'assise. Le vérin comporte de préférence une option de blocage rigide en compression et en extension. Le vérin 26 peut alors également être utilisé comme moyen de verrouillage, par exemple par l'intermédiaire d'une commande par câble permettant de bloquer son mouvement.

Le moyen de verrouillage, peut également être réalisé par une indexation mécanique, par un moteur, ou encore par une roue dentée.

Alternativement, le moyen de rappel du dispositif d'assistance peut être un ensemble élastique 27 comprenant un ou plusieurs élastiques disposés en parallèle. La longueur des élastiques est de préférence supérieure à 80 cm, afin de fournir la force nécessaire en supportant une variation de hauteur du siège de l'ordre par exemple de 40 cm. L'ensemble élastique présente l'avantage d'être un moyen de rappel dont la force est facilement réglable. L'ensemble élastique 27 comprend de préférence un moyen d'ajustement de tension, permettant par exemple de modifier la position de l'attache de l'ensemble élastique 27 au châssis 1. Si on souhaite augmenter la force du moyen de rappel, on peut ainsi augmenter la tension du ou des élastiques. On peut aussi, alternativement ou en combinaison, ajouter un ou plusieurs élastiques à l'ensemble élastique 27. Si l'on souhaite diminuer la force du moyen de rappel, on peut diminuer la tension du ou des élastiques, ou on peut retirer un ou plusieurs élastiques de l'ensemble élastique 27. Le moyen d'ajustement de tension permet également de détendre presque totalement les élastiques afin que l'utilisateur, sans être assis sur le dispositif d'assise, puisse facilement baisser totalement le siège à la main, par exemple pour ranger le véhicule. La détente totale des élastiques sécurise aussi l'ajout ou le retrait d'élastiques à l'ensemble élastique 27.

L'ensemble élastique 27 peut être fixé d'un côté directement au châssis, et de l'autre directement au dispositif d'assise 3. Il peut également être fixé au dispositif d'assise 3 par l'intermédiaire des bielles inférieures 22, et notamment d'une barre cylindrique reliant les bielles inférieures 22, comme représenté aux fig. 5 à 7. De préférence, l'ensemble élastique 27 est fixé au dispositif d'assise 3 par l'intermédiaire d'un câble 28. Le câble 28 peut cheminer sur le châssis 1 par une ou plusieurs poulies ou anneaux à friction, afin de disposer l'extrémité de l'ensemble élastique à un endroit tel que des élastiques d'une longueur satisfaisante puissent être disposés. Un tel endroit peut être à proximité de la partie basse du châssis 1, afin de disposer les élastiques horizontalement, par exemple dans une direction proche de la parallèle à la direction d'avancée du véhicule.

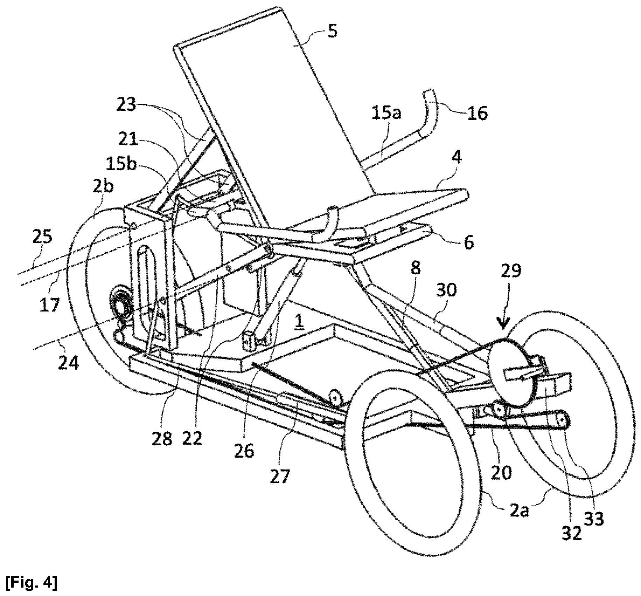

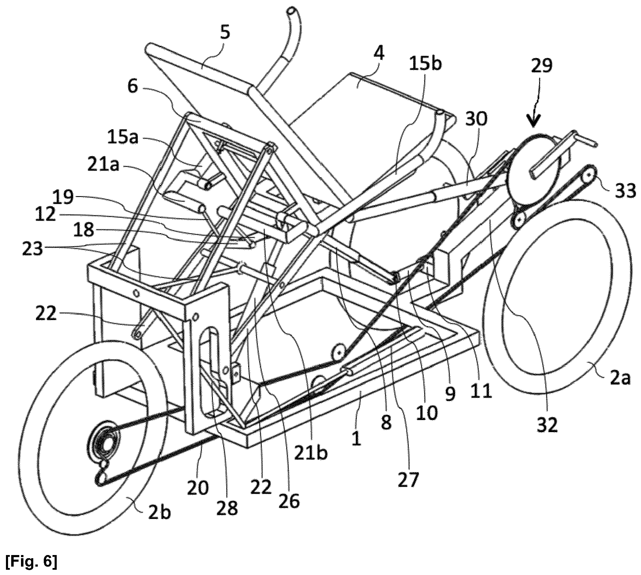

Dans le mode de réalisation préféré des fig. 1 à 7, le dispositif d'assistance comporte un vérin 26 et un ensemble élastique 27. Le vérin 26 est ainsi utilisé comme moyen de verrouillage en position du dispositif d'assise 3, et le vérin 26 et l'ensemble élastique poussent ensemble le dispositif d'assise 3 vers le haut. L'ensemble élastique permet de compléter l'effort du vérin avec un effort facilement réglable, comme décrit ci-dessus. De plus dans certains modes de réalisation, le vérin 26 peut se trouver dans certaines configurations dans une position proche de l'horizontale, comme représenté en fig. 4 et 6. Dans ce cas l'ensemble élastique 27 permet d'aider le vérin 26 à initier ou terminer son mouvement.

Le dispositif d'assistance, alternativement ou en combinaison au vérin 26 et/ou à l'ensemble élastique 27, peut comporter un moteur électrique, hydraulique ou pneumatique et/ou un ou plusieurs ressorts et/ou un ou plusieurs autres vérins par exemple électriques, hydrauliques ou pneumatiques.

Comme décrit ci-dessus, le moyen de positionnement du dispositif d'assise peut donc être actionné par l'utilisateur en faisant varier le poids qu'il exerce sur le dispositif d'assise. Alternativement ou en combinaison, le moyen de positionnement du dispositif d'assise peut comporter un ou plusieurs boutons, manette, ou autre, notamment si le dispositif d'assistance est motorisé.

Le véhicule selon l'invention peut être à propulsion humaine seule, ou avec une assistance motorisée, ou à propulsion uniquement motorisée.

Le véhicule peut comporter un pédalier 29. Si le véhicule est à propulsion humaine, le mouvement du pédalier 29 peut servir à propulser le véhicule. Alternativement, et notamment lorsque le véhicule est à propulsion motorisée, le pédalier 29 peut comporter des pédales de commande du véhicule telles qu'une pédale d'accélérateur, une pédale de frein, une pédale d'embrayage, etc. Dans ce cas on appelle l'axe du pédalier l'axe d'au moins une des pédales de commande.

Dans un mode de réalisation préféré, le véhicule est configuré pour que la position du pédalier 29 soit adaptée en permanence à la position du dispositif d'assise 3, et que les mouvements du dispositif d'assise 3 ne rendent pas la position de conduite de l'utilisateur inconfortable, notamment en obtenant une distance pratiquement fixe entre les hanches de l'utilisateur et l'axe du pédalier 29.

Le pédalier 29 peut être fixe, par exemple si les mouvements du dispositif d'assise 3 sont circulaires autour de l'axe du pédalier.

Le pédalier 29 peut être mobile, le véhicule comportant alors un dispositif de positionnement du pédalier, de préférence configuré pour être actionné par l'utilisateur pendant le pilotage dudit véhicule. Cette mobilité peut être par exemple entre une position avancée et une position reculée. La distance entre deux positions extrêmes du pédalier 29 peut par exemple être supérieure à 20 cm.

Dans un mode de réalisation préféré de l'invention, illustré aux fig. 1 à 7, la position du pédalier 29 est directement liée à la position du dispositif d'assise 3, et le dispositif de positionnement du pédalier est automatiquement actionné en mettant le dispositif d'assise 3 en mouvement. Afin de lier la position du pédalier 29 à celle du dispositif d'assise 3, le véhicule peut comporter une bielle de pédalier 30. Une première extrémité de la bielle de pédalier 30 est solidaire du pédalier 29, et une deuxième extrémité de la bielle de pédalier est solidaire du dispositif d'assise 3.

L'axe du pédalier est de préférence situé plus bas que le dispositif d'assise 3, au moins lorsque le dispositif d'assise 3 est en position haute. Lorsque le dispositif d'assise 3 descend à partir de la position haute, sa hauteur se rapproche de celle du pédalier 29. La bielle de pédalier 30, de longueur fixe, pousse alors le pédalier 29 vers l'avant. A l'inverse lorsque le dispositif d'assise 3 monte d'une position plus haute que le pédalier 29, la bielle de pédalier 30 tire le pédalier 29 vers l'arrière. Si la position basse du dispositif d'assise 3 est située plus basse que l'axe du pédalier 29, une montée du dispositif d'assise 3 depuis la position basse commencera par générer une poussée du pédalier 29 vers l'avant, puis lorsque le dispositif d'assise 3 montera plus haut que l'axe du pédalier 29, une traction du pédalier 29 vers l'arrière. De même si la position basse du dispositif d'assise 3 est située plus basse que l'axe du pédalier 29, une descente du dispositif d'assise 3 jusqu'à la position basse terminera par une traction du pédalier 29 vers l'arrière.

La longueur de la bielle de pédalier 30 peut être réglable, afin d'être adaptée à la morphologie de l'utilisateur. Toutefois sa longueur est de préférence fixe durant l'utilisation du véhicule.

Enfin, la position du pédalier 29 peut ne pas être directement liée à la position du dispositif d'assise 3. Le véhicule peut comporter un système de commande permettant à l'utilisateur de modifier la position du pédalier 29 manuellement, et de le bloquer dans la position désirée. Un tel changement de position peut par exemple être réalisé avant, après ou pendant le changement de position du dispositif d'assise 3. Ce système de commande peut par exemple être réalisé par câbles. Un avantage est que si le pédalier 29 est fixe pendant le mouvement du dispositif d'assise 3, l'utilisateur peut prendre appui sur le pédalier 29 pour mettre en mouvement le dispositif d'assise 3.

Afin de guider le déplacement du pédalier 29 par rapport au châssis 1, le pédalier 29 peut comporter une pièce de coulissement 31, coulissante le long d'un support de pédalier 32 solidaire du châssis 1. Alternativement à ce système de coulissement, le pédalier 29 peut être guidé par un système avec un pivot, un compas, un système à parallélogramme ou un autre assemblage mécanique connu.

Alternativement à la pièce de coulissement 31, le véhicule peut comporter une bielle guidant le déplacement du pédalier 29 par rapport au châssis 1. L'avantage de cette solution peut être d'obtenir une trajectoire du pédalier 29 qui contourne des éléments mécaniques, par exemple une mécanique d'essieu, pour éviter d'avoir une interférence entre le pédalage et ces éléments.

Enfin une autre solution permettant de conserver une distance fixe entre l'axe du pédalier 29 et le dispositif d'assise 3, est de rendre ces deux éléments solidaires, par exemple en les fixant à une structure mobile commune.

Le véhicule peut comporter une chaîne 20 afin de transmettre les mouvements du pédalier 29 vers au moins une roue 2 motrice. Dans ce cas, la chaîne 20 peut passer par une ou plusieurs roulettes de déviation 33 solidaire du châssis. La roulette de déviation 33 permet de conserver un chemin de chaîne de longueur constante quelle que soit la position du pédalier 29. En combinaison ou non avec la roulette de déviation 33, le véhicule peut également comporter un tendeur de chaîne afin de conserver un chemin de chaîne constant.

Alternativement à une chaîne 20, le véhicule peut comporter un système de cardan afin de transmettre les mouvements du pédalier 29 vers une roue 2 motrice. Le véhicule peut alors comporter un arbre télescopique afin de compenser le déplacement du pédalier.

Enfin le véhicule peut comporter un système de transmission du pédalage par fluide, ou électrique.

Le véhicule selon l'invention peut encore comporter un ou plusieurs éléments de carrosserie. Les éléments de carrosserie peuvent être disposés sur l'avant et/ou l'arrière et/ou les côtés et/ou le dessus du véhicule. L'élément de carrosserie peut servir d'élément de sécurité en cas d'accident, ou encore de protection contre les intempéries. Dans un mode de réalisation préféré, le véhicule comporte au moins un élément de carrosserie solidaire du dispositif d'assise 3. Cet élément est de préférence au moins partiellement situé au-dessus du dispositif d'assise 3, afin de fournir une protection contre les intempéries. Etant solidaire du dispositif d'assise 3, il monte et descend avec les mouvements du dispositif d'assise 3. Ainsi il n'est jamais situé inutilement haut par rapport à l'utilisateur, ce qui optimise l'aérodynamique du véhicule.

La présente invention concerne également un procédé d'utilisation du véhicule, comportant les étapes suivantes :
- pilotage dudit véhicule avec le dispositif d'assise 3 en position basse, et le cas échéant le pédalier 29 en position avancée,
- sans arrêter le véhicule, changement de position du dispositif d'assise 3 jusqu'à une position haute, et le cas échéant du pédalier 29 jusqu'à une position reculée.

La présente invention concerne finalement un procédé d'utilisation du véhicule, comportant les étapes suivantes, pouvant être mis en oeuvre juste avant ou juste après le procédé ci-dessus :
- pilotage dudit véhicule avec le dispositif d'assise 3 en position haute, et le cas échéant le pédalier 29 en position reculée,
- sans arrêter le véhicule, changement de position du dispositif d'assise 3 jusqu'à une position basse, et le cas échéant du pédalier 29 jusqu'à une position plus avancée que la position reculée.

Bien que la description ci-dessus se base sur des modes de réalisation particuliers, elle n'est nullement limitative de la portée de l'invention, et des modifications peuvent être apportées, notamment par substitution d'équivalents techniques ou par combinaison différente de tout ou partie des caractéristiques développées ci-dessus.

## Revendications

1. Véhicule comportant un châssis (1), au moins deux sustentateurs (2a, 2b) fixés audit châssis (1), un dispositif de guidage, et un dispositif d'assise (3) mobile par rapport audit châssis (1) entre une position haute et une position basse, ledit véhicule comportant un moyen de positionnement du dispositif d'assise configuré pour qu'un utilisateur puisse modifier la position du dispositif d'assise (3) de ladite position basse vers ladite position haute, **caractérisé en ce qu'**entre la position basse et la position haute, chaque point du dispositif d'assise (3) est élevé d'au moins 20 cm par rapport au châssis, et **en ce que** la forme et les dimensions de la surface d'appui au sol dudit véhicule sont identiques lorsque le dispositif d'assise (3) est en position haute et lorsque le dispositif d'assise (3) est en position basse.

2. Véhicule selon la revendication précédente, dans lequel ledit moyen de positionnement du dispositif d'assise est configuré pour qu'un utilisateur puisse modifier la position du dispositif d'assise (3) de ladite position basse vers ladite position haute pendant le pilotage dudit véhicule, la commande de ladite position du dispositif d'assise (3) étant indépendante de la vitesse du véhicule.

3. Véhicule selon l'une des revendications précédentes comportant un pédalier (29), ledit véhicule étant configuré pour qu'au moins un point du pédalier reste à distance constante d'au moins un point du dispositif d'assise (3) lors des mouvements dudit dispositif d'assise (3).

4. Véhicule selon la revendication précédente dans lequel ledit pédalier (29) est mobile par rapport au châssis (1) ledit véhicule comportant un dispositif de positionnement du pédalier, de préférence configuré afin que ledit pédalier (29) soit mobile entre une position avancée et une position reculée, de sorte que lorsque le dispositif d'assise (3) est en position haute, le pédalier (29) est en position reculée, et lorsque le dispositif d'assise (3) est en position basse, le pédalier (29) est dans une position plus avancée.

5. Véhicule selon la revendication précédente dans lequel ledit dispositif de positionnement du pédalier comporte une bielle de pédalier (30), une première extrémité de ladite bielle de pédalier (30) étant solidaire de l'axe du pédalier (29), et une deuxième extrémité de ladite bielle de pédalier (30) étant solidaire du dispositif d'assise (3).

6. Véhicule selon l'une des revendications 3 à 5, dans lequel le pédalier (29) comporte une pièce de coulissement (31) apte à coulisser le long d'un support de pédalier (32) solidaire du châssis (1).

7. Véhicule selon l'une des revendications précédentes comportant un dispositif de guidage, ledit dispositif de guidage comprenant un moyen de commande de guidage mobile par rapport au châssis (1), et un dispositif de positionnement du moyen de commande de guidage configuré pour être actionné par l'utilisateur pendant le pilotage dudit véhicule, ledit moyen de commande de guidage (7) étant de préférence fixé audit dispositif d'assise (3), de façon à ce que le moyen de commande de guidage (7) suive les mouvements du dispositif d'assise (3) par rapport au châssis (1).

8. Véhicule selon la revendication précédente, dans lequel ledit dispositif de guidage comprend encore un arbre tournant central (8) situé entre le dispositif d'assise (3) et le châssis (1), ledit arbre tournant central (8) étant de longueur et/ou d'inclinaison variable et configuré pour adapter sa longueur et/ou son inclinaison lors des mouvements du dispositif d'assise (3) par rapport au châssis (1).

9. Véhicule selon la revendication précédente, dans lequel ledit dispositif de guidage comporte un arbre tournant aval (9), une première extrémité dudit arbre tournant central (8) étant articulée avec ledit arbre tournant aval (9) par un premier joint rotule (10), l'axe de rotation de l'arbre tournant aval (9) étant solidaire du châssis (1).

10. Véhicule selon l'une des revendications 8 ou 9, dans lequel le dispositif de guidage comporte un arbre tournant amont (12) relié audit moyen de commande de guidage (7), de façon à ce qu'une commande de guidage d'un utilisateur génère une rotation dudit arbre tournant amont (12), ledit arbre tournant amont (12) étant articulé avec une deuxième extrémité de l'arbre tournant central (8) par un deuxième joint rotule (13), l'axe de rotation de l'arbre tournant amont (12) étant solidaire du dispositif d'assise (3).

11. Véhicule selon la revendication précédente, dans lequel :
- ledit moyen de commande de guidage (7) comporte au moins un élément de commande (15), lesdits éléments de commande (15) étant fixés mobile en rotation autour d'un axe de commande (17) solidaire du dispositif d'assise (3),
- ledit arbre tournant amont (12) comporte, à son extrémité éloignée dudit deuxième joint rotule (13), une barre de manœuvre (18) perpendiculaire à son axe de rotation,
- et chaque élément de commande (15) est relié à une des extrémités de la barre de manoeuvre (18) de manière à ce que la rotation d'au moins un élément de commande (15) produise la rotation de la barre de manœuvre (18).

12. Véhicule selon l'une des revendications précédentes, dans lequel ledit dispositif d'assise (3) est relié au châssis (1) par deux bielles inférieures (22) parallèles entre elles et deux bielles supérieures (23) parallèles entre elles.

13. Véhicule selon l'une des revendications précédentes comportant un dispositif d'assistance et un moyen de verrouillage de la position du dispositif d'assise (3) par rapport au châssis (1), ledit dispositif d'assistance comportant au moins un moyen de rappel, une première extrémité dudit moyen de rappel étant solidaire du châssis (1) et une deuxième extrémité dudit moyen de rappel étant solidaire du dispositif d'assise (3).

14. Véhicule selon l'une des revendications précédentes, comportant un élément de carrosserie solidaire dudit dispositif d'assise (3).

15. Procédé d'utilisation d'un véhicule selon l'une des revendications précédentes, comportant les étapes suivantes :
- pilotage dudit véhicule avec le dispositif d'assise (3) en position basse, et le cas échéant le pédalier (29) en position avancée,
- sans arrêter le véhicule, changement de position du dispositif d'assise (3) jusqu'à une position haute, et le cas échéant du pédalier (29) jusqu'à une position reculée.
